# EUROPEAN PATENT SPECIFICATION

(11) **EP 1 632 398 B1**
(45) Date of publication and mention of the grant of the patent: **24.03.2010**
(21) Application number: 05015313.9
(22) Date of filing: 06.07.2001
(51) Int. Cl.: B60R 13/02

(54) **Headliner and method of manufacturing the same**
Dachhimmel und Verfahren zu dessen Herstellung
Garniture intérieure de pavillon et procédé de fabrication

(30) Priority: 07.07.2000 US 216757 P
(43) Date of publication of application: 08.03.2006
(62) Divisional of application: 01951280.5
(73) Proprietor: Magna Interior Systems Inc., Aurora, Ontario L4G 7K1 (CA)
(72) Inventor: Kocher, Larry F., Canton, MI 48187 (US); Gorowicz, Janusz P., Pinckney, MI 48169 (US); Marceau, Normand R., Linden, MI 48451 (US)
(74) Representative: Hössle Kudlek & Partner

(56) References cited:
- WO-A-00/64706
- WO-A-96/13377
- US-A- 5 007 976
- US-A- 5 529 479
- US-A- 5 582 906
- US-A- 5 804 262
- US-A- 5 942 321

## Description

### BACKGROUND OF THE INVENTION

### 1. Field of the Invention

The present invention relates to a headliner for use with a motor vehicle and, more particularly, to a headliner formed of multiple layers to provide shape stability and a method of manufacturing the same.

### 2. Description of the Related Art

Headliners are used with motor vehicles to provide a pleasing finish to the interior of a vehicle compartment. Headliners also provide for sound absorption and insulation and accordingly increase the quality of environment in the vehicle compartment.

Headliners typically include a number of different layers of material. Typically, they are formed of a foam or urethane core sprayed between two reinforcing layers. The layers of material are assembled and then molded into the desired shape, normally the shape of the vehicle ceiling. Such a headliner is disclosed in document US-A-5,804,262. Current urethane headliners tend to warp shortly after demolding and often retain the distorted shape permanently.

Therefore, it is desirable to provide a multi-layer headliner, and method of manufacturing same, such that the headliner will retain its molded shaped and not warp after being removed from the mold.

### SUMMARY OF THE INVENTION

The present invention provides a headliner and method of making the same that overcomes the problem of permanent warpage normally occurring shortly after demold. According to one aspect of the invention a headliner is formed of top and bottom layers having a urethane matrix sprayed between the layers to form the core. The headliner includes a separate scrim layer, a film layer, and a chopped fiber material randomly distributed between the film layer and the urethane core. In some instances, a binder material may be used to increase adherence of the chopped fiber material to the film layer. The film layer is perforated to allow for degassing of the urethane matrix.

According to another aspect of the invention a method is provided for forming a headliner for an automotive vehicle. The method includes the steps of providing a top layer and bottom layer of laminated non-woven polypropylene scrim and polyethylene film, providing a layer of fiberglass mat between the top and bottom layers, dispensing a urethane matrix onto the layer of fiberglass mat between the top and bottom layers, and randomly dispersing a chopped fiber material between at least one of the top and bottom layers and the urethane matrix to provide internal structural rigidity to the headliner.

Accordingly, the combination of the chopped fiber material and a non-woven film provide a synergistic effect that eliminates headliner warpage. The combination of stiffness and mechanical bond between the film layer and chopped fiber material randomly distributed between the film layer and urethane core provides this effect.

### BRIEF DESCRIPTION OF THE DRAWINGS

Other features and advantages of the present invention will be readily appreciated as the same becomes better understood after reading the subsequent description when considered in connection with the accompanying drawings wherein:
Fig. 1 is a top view of an automotive headliner according to the present invention;
Fig. 2 is an enlarged partial cross-sectional view of the headliner of Fig. 1 taken along line 2-2 of Fig. 1;
Fig. 3 is a schematic side view of an apparatus using a method of forming the headliner of the present invention with the press shown in the open position; and
Fig. 4 is a schematic side view of an alternative embodiment of an apparatus using a method of forming the headliner of the present invention with the press shown in the open position.

### DETAILED DESCRIPTION OF THE PREFERRED EMBODIMENTS

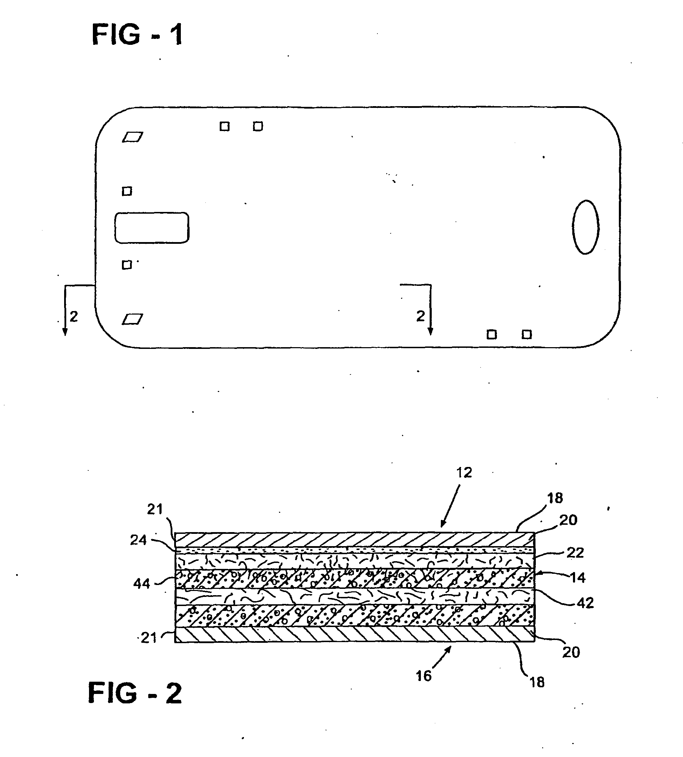

Referring to Fig. 1, there is illustrated a headliner 10 of the present invention. The headliner 10 conforms and fits to the ceiling of the passenger compartment of a motor vehicle. The headliner 10 is formed as a laminate including a top layer 12, a urethane core 14 and a bottom layer 16.

As shown in Fig. 2, each of the top and bottom layers 12, 16 include a non-woven polypropylene scrim 18 and a polyethylene film 20 combined to form a laminate 21. The non-woven polypropylene scrim 18 is preferably supplied by weight, specifically, 0.1 to 2.0 ounces per square yard, while the polyethylene film 20 is preferably 0.0005 to 0.003 inches thick.

The scrim 18 and film 20 are laminated by a combination of heat and pressure through nip rolls. Nip rolls are a pair of opposed rollers having a small gap therebetween. The rollers are heated to a temperature of about 160 degrees Fahrenheit and the scrim 18 and film 20 are run through the heated rollers to create a bond and laminate the scrim 18 and film 20. The laminate 21 is then perforated. Perforation of the laminate 21 allows air and gas to permeate through the laminate 21 during the step of forming the core 14.

The core 14 is formed from a layer of a fiberglass mat 42 embedded in a urethane matrix of foam 44.

A chopped fiberglass roving 22 is randomly distributed between the film 20 of the top layer 12 and the core 14. In one embodiment of the invention, the chopped fiberglass roving 22 is randomly distributed on the film 20. When the chopped fiberglass roving 22 is distributed on the film 20 prior to forming the substrate; i.e. when the laminate 21 includes the chopped fiberglass roving 22, a binder material 24 is also distributed on the film 20 and operates to adhere the chopped fiberglass roving 22 to the film 20. The binder material 24 may be distributed on the film 20 along with the chopped fiberglass roving 22. The binder material 24 is a polyester powder adhesive that can be purchased from Bostick of Middleton, Massachusetts. When used, the binder material 24 is applied by weight, specifically, 1 to 20 percent, by means of a shaker box that distributes at random a specific amount of the adhesive. The weight of the chopped fiberglass roving 22 determines the amount of binder 24 required; e.g., 40 grams per square meter requires 5 grams of powder adhesive or approximately 12 percent by weight. The fiberglass roving 22 is formed of fiberglass strands having a diameter of .03 inches chopped into two-inch lengths. As set forth above, the chopped fiberglass is randomly distributed on either the polyethylene film 20 or the urethane core 14 at a density of 5 to150 grams per square meter. It should be appreciate that the fiberglass roving 22 may alternatively be randomly distributed between the polyethylene film 20 of the bottom layer 16 and the core 14 or between both the top and bottom layers 12, 16 and the core 14.

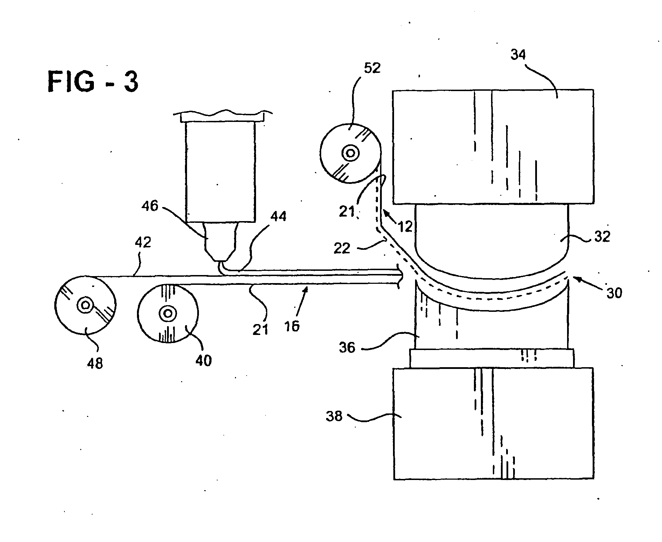

Turning now to Fig. 3, there is shown an apparatus for use with the method for forming the headliner panel 10. The apparatus includes a forming tool or die 30 shown with an upper platen 32 attached to a press head 34 and a lower platen 36 attached to a press bed 38. The laminate 21 forms both the top 12 and bottom 16 layers of the headliner 10 and is supplied as a rolled good from supply rollers 40, 41. The fiberglass mat 42 is supplied as a rolled good from supply roller 48. During the manufacturing process, as the glass mat 42 is rolled or pulled into the forming tool 30, the urethane matrix 44 is sprayed onto the glass mat 42 by a urethane spray head 46. Next, the chopped fiberglass roving 22 is distributed from a hopper 50 onto the urethane matrix 44, after which the entire assembly including the top layer 12, chopped fiberglass roving 22, urethane matrix 44, glass mat 42, and bottom layer 16 are placed in the forming tool 30 which operates, through a molding cycle, to form the headliner 10. In this method or process, no binder 24 is used. If required, additional glass or other fibers can be added as rolled goods prior to spraying the urethane matrix 44. Also, additional chopped fiber materials such as jute, sisal, or hemp may be used in place of the chopped fiberglass roving 22.

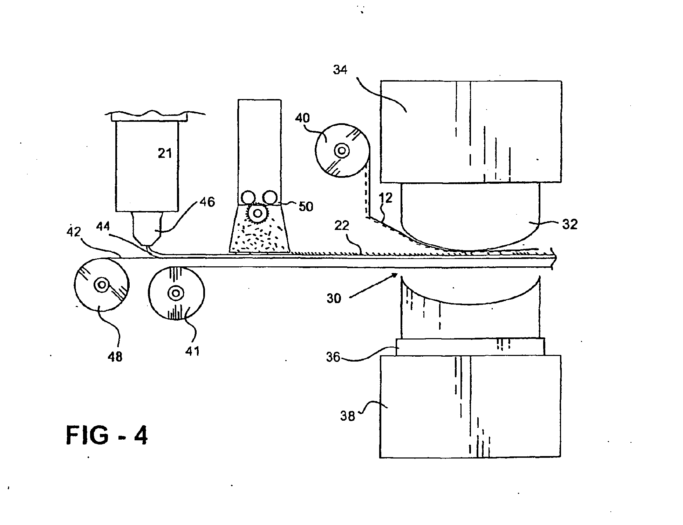

Turning now to Fig. 4, an alternative embodiment of an apparatus and method for manufacturing a headliner 10 is shown. Again, a forming tool or die 30 receives the headliner 10 components from a plurality of supply rollers. The lower or bottom layer 16 is the laminate 21 supplied as a rolled good drawn from supply roller 40. A fiberglass mat 42 is also supplied from a supply roll 48. Once again, prior to the molding process, a urethane matrix 44 is deposited on the fiberglass mat 42 by a urethane spray head 46. The top layer 12 includes the laminate 21 with the chopped fiberglass roving 22 already secured thereto by a binder material 24. The top layer 12 is supplied as a rolled good from a supply roller 52.

Accordingly, the chopped fiberglass roving 22 gives internal structure to the headliner 10 as the urethane matrix 44 adheres to the chopped fiberglass roving 22 to prevent the headliner 10 from warping after shaping and molding in the forming tool 30. It should be understood that the film 20, while perforated to allow the air and gas to escape therethrough, provides a barrier that prevents the urethane matrix 44 from leaking through to the outer surface of the headliner 10. Finally, the scrim 18 provides an anti-squeak and smooth surface quality to the outer surface of the headliner 10.

Pursuant to the present invention, the chopped fiber material combines with the polypropylene non-woven material and polyethylene film to prevent warpage in headliners and similar products. As disclosed herein, various chopped fiber materials may be used. The invention teaches inline random distribution of the chopped fiber material during introduction directly onto the urethane matrix. Alternatively, the chopped fiber material is randomly distributed on and attached to the polypropylene non-woven material and polyethylene film laminate by a binder material prior to layering with the urethane matrix.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A headliner (10) for use in an automotive vehicle comprising:
a top layer (12) and a bottom layer (16),
a urethane matrix disposed between said top layer (12) and said bottom layer (16) and forming a urethane core (14), and
a chopped fiber material (22) randomly distributed between at least one of said top layer (12) and said bottom layer (16) and said urethane matrix (14), **characterized in that**
each of said top and bottom layers (12, 16) include a laminated scrim layer (18) and film layer (20).

2. A headliner (10) as set forth in claim 1 wherein said urethane matrix includes a layer of fiberglass mat (42) and a layer of urethane foam (44).

3. A headliner (10) as set forth in claim 2 wherein said top layer (12) includes a non-woven polypropylene scrim (18).

4. A headliner (10) as set forth in claim 3 wherein said top layer (12) includes a polyethylene film (20) bonded to said scrim (18) to form a top laminate (21).

5. A headliner (10) as set forth in claim 4 wherein said bottom layer (16) includes a non-woven polypropylene scrim (18).

6. A headliner (10) as set forth in claim 5 wherein said bottom layer (16) includes a polypropylene film (20) bonded to said scrim (18) to form a bottom laminate (21).

7. A headliner (10) as set forth in claim 6 wherein said urethane matrix (14) includes a fiberglass mat embedded in a layer of urethane foam (44) between said top and bottom layers (12, 16).

8. A headliner (10) as set forth in claim 7 wherein said chopped fiber material includes strands of chopped fiberglass roving (22) randomly distributed between one of said top and bottom layers (12, 16) and said urethane matrix.

9. A headliner (10) as set forth in claim 8 wherein said chopped fiber material (22) includes jute.

10. A headliner (10) as set forth in claim 8 wherein said chopped fibre material (22) includes sisal.

11. A headliner (10) as set forth in claim 8 wherein said chopped fiber material (22) includes hemp.

## Patentansprüche

1. Ein Dachhimmel (10) zur Verwendung in einem Kraftfahrzeug, welcher umfasst:
eine Oberschicht (12) und eine Bodenschicht (16),
eine Urethan-Matrix (14), welche zwischen der Oberschicht (12) und der Bodenschicht (16) angeordnet ist und einen Urethan-Kern (14) bildet, und
ein Kurzfasermaterial (22), welches zufällig zwischen mindestens einer aus der Ober- (12) und der Bodenschicht (16) und der Urethan-Matrix (14) verteilt ist, **dadurch** charakterisiert, dass
sowohl die Ober- als auch die Bodenschicht (12, 16) eine mehrschichtige Gitterstoffschicht (18) und Filmschicht (20) aufweisen.

2. Dachhimmel (10) nach Anspruch 1, wobei die Urethan-Matrix (14) eine Schicht aus Glasfaservlies (42) und eine Schicht aus Urethan-Schaum (44) aufweist.

3. Dachhimmel (10) nach Anspruch 2, wobei die Oberschicht (12) einen nicht-gewebten Polypropylen-Gitterstoff (18) umfasst.

4. Dachhimmel (10) nach Anspruch 3, wobei die Oberschicht (12) einen Polypropylen-Film (20) aufweist, welcher mit dem Gitterstoff (18) zur Bildung eines oberen Schichtstoffs (21) verbunden ist.

5. Dachhimmel (10) nach Anspruch 4, wobei die Bodenschicht (16) einen nicht-gewebten Polypropylen-Gitterstoff (18) umfasst.

6. Dachhimmel (10) nach Anspruch 5, wobei die Bodenschicht (16) einen Polypropylen-Film (20) aufweist, welcher mit dem Gitterstoff (18) zur Bildung eines unteren Schichtstoffs (21) verbunden ist.

7. Dachhimmel (10) nach Anspruch 6, wobei die Urethan-Matrix (14) ein Glasfaservlies umfasst, welches in einer Schicht aus Urethan-Schaum (44) zwischen der Ober- und Bodenschicht (12,16) eingebettet ist.

8. Dachhimmel nach Anspruch 7, wobei das Kurzfasermaterial Fasern von Kurzglasfaserroving (22) umfasst, welche zufällig zwischen einer der Ober- und Bodenschichten (12, 16) und der Urethan-Matrix verteilt sind.

9. Dachhimmel (10) nach Anspruch 8, wobei das Kurzfasermaterial (22) Jute umfasst.

10. Dachhimmel (10) nach Anspruch 8, wobei das Kurzfasermaterial (22) Sisal umfasst.

11. Dachhimmel (10) nach Anspruch 8, wobei das Kurzfasermaterial (22) Hanf umfasst.

## Revendications

1. Garniture intérieure de pavillon (10) destinée à être utilisée dans un véhicule automobile, comprenant :
une couche supérieure (12) et une couche inférieure (16),
une matrice en uréthane disposée entre ladite couche supérieure (12) et ladite couche inférieure (16) et formant un noyau en uréthane (14), et
un matériau en fibres hachées (22) distribuées de façon aléatoire entre l'une au moins de ladite couche supérieure (12) et de ladite couche inférieure (16) et ladite matrice en uréthane (14),
**caractérisée en ce que** chacune parmi ladite couche supérieure et ladite couche inférieure (12, 16) inclut une couche grillagée (18) et une couche en film (20) stratifiées.

2. Garniture intérieure de pavillon (10) selon la revendication 1, dans laquelle ladite matrice en uréthane inclut une couche d'une nappe de fibres de verre (42) et une couche de mousse en uréthane (44).

3. Garniture intérieure de pavillon (10) selon la revendication 2, dans laquelle ladite couche supérieure (12) inclut un grillage (18) non-tissé en polypropylène.

4. Garniture intérieure de pavillon (10) selon la revendication 3, dans laquelle ladite couche supérieure (12) inclut un film en polyéthylène (20) collé sur ledit grillage (18) pour former une couche stratifiée supérieure (21).

5. Garniture intérieure de pavillon (10) selon la revendication 4, dans laquelle ladite couche inférieure (16) inclut un grillage (18) non-tissé en polypropylène.

6. Garniture intérieure de pavillon (10) selon la revendication 5, dans laquelle ladite couche inférieure (16) inclut un film en polypropylène (20) collé sur ledit grillage (18) pour former une couche stratifiée inférieure (21).

7. Garniture intérieure de pavillon (10) selon la revendication 6, dans laquelle ladite matrice en uréthane (14) inclut une nappe en fibres de verre noyée dans une couche de mousse en uréthane (44) entre ladite couche supérieure et ladite couche inférieure (12, 16).

8. Garniture intérieure de pavillon (10) selon la revendication 7, dans laquelle ledit matériau en fibres hachées inclut des brins de stratifils en fibres de verre hachées (22) distribuées de manière aléatoire entre l'une parmi ladite couche supérieure et ladite couche inférieure (12, 16) et ladite matrice en uréthane.

9. Garniture intérieure de pavillon (10) selon la revendication 8, dans laquelle ledit matériau en fibres hachées (22) inclut du jute.

10. Garniture intérieure de pavillon (10) selon la revendication 8, dans laquelle ledit matériau en fibres hachées (22) inclut du sisal.

11. Garniture intérieure de pavillon (10) selon la revendication 8, dans laquelle ledit matériau en fibres hachées (22) inclut du chanvre.
